# EUROPÄISCHE PATENTSCHRIFT

(11) **EP 2 280 872 B1**
(45) Veröffentlichungstag und Bekanntmachung des Hinweises auf die Patenterteilung: **25.07.2012**
(21) Anmeldenummer: 09737891.3
(22) Anmeldetag: 29.04.2009
(51) Int. Cl.: B64F 5/00, F01D 25/00, B24C 1/00

(54) **VERFAHREN UND VORRICHTUNG ZUM REINIGEN EINES STRAHLTRIEBWERKS UNTER VERWENDUNG VON FESTEM KOHLENDIOXID**
METHOD AND DEVICE FOR CLEANING A JET ENGINE USING SOLID CARBON DIOXIDE
PROCEDE ET SYSTEME POUR NETTOYER UN MOTEUR A REACTION AU MOYEN DE DIOXYDE DE CARBONE SOLIDE

(30) Priorität: 30.04.2008 DE 102008021746
(43) Veröffentlichungstag der Anmeldung: 09.02.2011
(73) Patentinhaber: Lufthansa Technik AG, 22335 Hamburg (DE)
(72) Erfinder: GILJOHANN, Sebastian, 64289 Darmstadt (DE); PAUL, Manfred, 55299 Nackenheim (DE)
(74) Vertreter: Glawe, Delfs, Moll
(86) Internationale Anmeldenummer: PCT/EP2009/003120
(87) Internationale Veröffentlichungsnummer: WO 2009/132847

(56) Entgegenhaltungen:
- EP-A- 1 970 133
- WO-A-96/40453
- WO-A-2005/077554
- WO-A-2005/120953
- JP-A- 2000 042 505
- US-B1- 7 445 677

## Beschreibung

Die Erfindung betrifft eine Vorrichtung, eine Anordnung sowie ein Verfahren zum Reinigen eines Flugzeugstrahltriebwerks.

Flugzeugstrahltriebwerke besitzen in bekannter Weise eine oder mehrere Kompressorstufen, eine Brennkammer, sowie eine oder mehrere Turbinenstufen. In den Turbinenstufen geben die aus der Brennkammer stammenden heißen Verbrennungsgase einen Teil ihrer thermischen und mechanischen Energie ab, die zum Antrieb der Kompressorstufen genutzt wird. Strahltriebwerke von kommerziellen Verkehrsflugzeugen weisen heute weit überwiegend einen sogenannten Turbofan auf, der stromaufwärts von den Kompressorstufen angeordnet ist und in der Regel einen erheblich größeren Durchmesser als die Kompressorstufen aufweist. Der Turbofan wird ebenfalls durch die Turbinenstufen angetrieben und lässt einen erheblichen Teil der das Triebwerk insgesamt durchströmenden Luft als sogenannten Nebenluftstrom an den Kompressorstufen, der Brennkammer und den Turbinenstufen vorbeiströmen. Durch einen solchen Nebenstrom kann der Wirkungsgrad eines Triebwerks erheblich gesteigert und außerdem noch für eine verbesserte Geräuschdämmung des Triebwerks gesorgt werden.

Eine Verschmutzung eines Flugzeugstrahltriebwerks kann zu einer Reduktion des Wirkungsgrades führen, was einen erhöhten Kraftstoffverbrauch und damit eine erhöhte Umweltbelastung zur Folge hat. Die Verschmutzung kann beispielsweise durch Insekten, Staub, Salznebel oder sonstigen Umweltverunreinigungen hervorgerufen werden. Teile des Triebwerks können durch Verbrennungsrückstände der Brennkammer kontaminiert werden. Diese Verunreinigungen bilden einen Belag auf den mit Luft durchströmten Teilen eines Flugzeugtriebwerks und beeinträchtigen die Oberflächengüte. Damit wird der thermodynamische Wirkungsgrad des Triebwerks beeinträchtigt. Hierbei sind insbesondere die Schaufeln in den Kompressorstufen zu nennen, deren Verschmutzung einen erheblichen Einfluss auf den Wirkungsgrad des gesamten Triebwerks hat.

Zur Beseitigung von Verunreinigungen ist bekannt, ein Triebwerk mit einer Reinigungsflüssigkeit, in der Regel heißes Wasser, zu reinigen. Aus der WO 2005/120953 ist eine Anordnung bekannt, bei der eine Mehrzahl von Reinigungsdüsen stromaufwärts des Turbofans bzw. der Kompressorstufen angeordnet werden. Die Reinigungsflüssigkeit wird dann in das Triebwerk gesprüht. Das Triebwerk kann sich dabei im sogenannten Dry-Cranking, d.h. die Schaufeln des Triebwerks rotieren, ohne dass in der Brennkammer Kerosin verbrannt wird, drehen. Durch die in das Triebwerk eingebrachte Reinigungsflüssigkeit sollen Verschmutzungen so von den Oberflächen der Triebwerkskomponenten abgewaschen werden. WO 96/40453 A1, die als nächttiegender Stand der Technik betrachtet wird, offenbart die Reinigung eines Strahltriebwerks mittels Wasser als Reinigungsmedium. JP 2000042505 beschreibt die Reinigung eines Turbinenrotors mittels Trockeneis.

Alternativ zur Verwendung von Wasser als Reinigungsmedium ist die Verwendung von Kohlenstaub bekannt. Der Kohlenstaub wird dabei wie das Wasser durch Düsen in das Triebwerk eingebracht und trägt Verunreinigungen von Oberflächen aufgrund von abrasiven Effekten ab. Allerdings wird durch den Kohlestaub auch die Oberfläche der Triebwerksteile angegriffen, weshalb ein Reinigungsmedium wie Kohlenstaub sich nicht für die regelmäßige Reinigung von Flugzeugtriebwerken eignet. Außerdem bleiben beim Reinigen mit Kohlenstaub ungewünschte Reste des Reinigungsmaterials im Triebwerk zurück.

Der Erfindung liegt die Aufgabe zugrunde, eine Vorrichtung, eine Anordnung und ein Verfahren zu schaffen, die eine verbesserte Reinigung von Flugzeugtriebwerken ermöglichen.

Diese Aufgabe wird gelöst durch eine Vorrichtung gemäß dem Anspruch 1, eine Anordnung gemäß Anspruch 9 bzw. ein Verfahren gemäß Anspruch 12. Vorteilhafte Weiterbildungen ergeben sich aus den abhängigen Ansprüchen.

Demnach betrifft die Erfindung eine Vorrichtung zum Reinigen eines Strahltriebwerks mit einer Versorgungseinrichtung, die ein Reinigungsmedium zur Verfügung stellt, einer Düseneinrichtung, die zum Einbringen des Reinigungsmediums in das Strahltriebwerk ausgebildet ist, und einer Leitungsverbindung zwischen der Versorgungseinrichtung und der Düseneinrichtung, wobei das Reinigungsmedium festes Kohlendioxid aufweist bzw. vorzugsweise daraus besteht, und dass die Düseneinrichtung Mittel zur drehfesten Verbindung mit der Welle des Turbofans des Strahltriebwerks aufweist und eine Drehkupplung zwischen der Düseneinrichtung und der Leitungsverbindung vorgesehen ist.

Die Erfindung betrifft weiterhin eine Anordnung aus einem Strahltriebwerk und einer erfindungsgemäßen zur Vornahme einer Reinigung des Strahltriebwerks geeignete Vorrichtung, wobei die zur Vornahme der Reinigung des Strahltriebwerks geeignete Vorrichtung stromaufwärts des Turbofans oder der Kompressorstufen so angeordnet ist, dass die Düsen der Vorrichtung auf den Turbofan oder die Kompressorstufen gerichtet sind.

Die Erfindung betrifft weiterhin ein Verfahren zum Reinigen eines Strahltriebwerks mit einem Reinigungsmittel, wobei als Reinigungsmittel festes Kohlendioxid verwendet wird und das Verfahren wie in Anspruch 12 beschrieben durchgeführt wird.

Das feste Kohlendioxid kann in der Versorgungseinrichtung in Form von Pellets bereitgestellt werden, die mit Hilfe eines Treibgases aus der Düseneinrichtung gesprüht werden. Es ist aber auch möglich, flüssiges Kohlendioxid als Vorstufe des Reinigungsmediums in der Versorgungseinrichtung vorzusehen. Das flüssige Kohlendioxid erstarrt beim Austritt aus der Düseneinrichtung wenigstens teilweise und bildet eine feste Komponente in Form von Kohlendioxidflocken.

Kommt flüssiges Kohlendioxid mit Umgebungsluft in Kontakt, in dem es z.B. durch eine Düse austritt, so nimmt ein Teil sogleich Gasform an. Ein anderer Teil des Kohlendioxids wird in Form von Flocken fest. Dies rührt daher, dass der aus der flüssigen in den gasförmigen Zustand übergehende Teil des Kohlendioxids sehr viel Wärme bindet, welche dem übrigen noch flüssigen Teil entzogen wird, wodurch die Temperatur desselben bis zu dem Erstarrungspunkt des Kohlendioxids sinkt. Das feste Kohlendioxid erhält man auf diese Weise als weiße, schneeartige Flocken, welche sich an der Luft ziemlich lange halten, und zwar unabhängig von der Temperatur der Luft. Wegen der schlechten Leitfähigkeit für Wärme und der sehr niedrigen Temperatur des festen Kohlendioxids findet nämlich nur ein sehr langsames Sublimieren statt. Das aus den Flocken fortwährend gasförmig entweichende Kohlendioxid bildet eine Schutzschicht um die Flocken, der in der Regel einen direkten Kontakt mit den festen Flocken verhindert. Pellets können in einem sog. Pelletiser aus flüssigem CO₂ hergestellt werden und sind gut lagerungsfähig. Es kann vorgesehen sein, dass die Versorgungseinrichtung bereits vorgefertigte Pellets mit Hilfe eines Treibgases zur Düseneinrichtung befördert. Es ist aber auch möglich, dass die Versorgungseinrichtung eine Vorrichtung aufweist, um aus flüssigem Kohlendioxid Kohlendioxidpellets zu formen, und diese mit einem Treibgas zur Düseneinrichtung befördert. In beiden Fällen tritt das feste Kohlendioxid aus den Düsen der Düseneinrichtung aus und gelangt in das zu reinigende Triebwerk.

In dem Dokument "Carbon Dioxide Blasting Operations" der US-Streitkräfte ist die Technik zur Herstellung von CO₂-Flocken und Pellets beschrieben. CO₂-Flocken entstehen bei Austritt von flüssigem und/oder gasförmigen CO₂ aus einer Düse durch die Verdampfungskälte des austretenden CO₂. Pellets weisen eine höhere Dichte als Flocken auf und werden bspw. durch eine Verdichtung von festem CO₂ (bspw. Flocken) in einem Pelletiser oder dergleichen gewonnen.

Gegenüber Wasser bietet Kohlendioxid als Reinigungsmedium den Vorteil, dass es bei beliebigen Außentemperaturen eingesetzt werden kann, d.h. auch bei Temperaturen unter 5 °C. Deshalb kann es ganzjährig zum Einsatz kommen. Außerdem sublimieren die Kohlendioxidflocken nach einiger Zeit vollständig, so dass es zu keinen Rückständen im Triebwerk kommt. Durch die angesprochene Schutzschicht durch das aus den Flocken entweichende Gas wirken die Kohlendioxidflocken auch nicht abrasiv, wie z.B. das bereits bekannte Reinigungsmedium Kohlenstaub. Vielmehr kommt die Reinigungswirkung im Wesentlichen durch thermische Effekte zu Stande. Aufgrund der durch die Kohlendioxidflocken induzierten Wärme-Kälte-Spannungen werden die Verunreinigungen von den Oberflächen der Triebwerksteile abgelöst. Der abgelöste Schmutz wird entweder durch den bereits im Dry-Cranking vorhandenen Luftstrom aus dem Triebwerk geblasen, spätestens jedoch beim erstmaligen Anlassen des Triebwerks nach einer Reinigung mit Kohlendioxid.

Wie angesprochen bleiben nach einer Reinigung mit Kohlendioxid keinerlei Rückstände, welche den Betrieb beeinträchtigen könnten, im Motor, da die Kohlendioxidflocken oder Pellets vollständig sublimieren. Der Betrieb des Triebwerks und damit des gesamten Flugzeugs ist durch den Wegfall von möglichen Rückständen, und damit einer möglichen Stör- bzw. Fehlerquelle, noch sicherer.

Die Versorgungseinrichtung stellt das Reinigungsmedium zur Verfügung (beispielsweise in einem oder mehreren Tanks) und kann mit Bedienungs- und Antriebseinrichtungen, Pumpen, Energiespeichern oder dergleichen versehen sein. Sie ist vorzugsweise als mobile, insbesondere fahrbare Einheit ausgebildet.

Die Düseneinrichtung weist eine, zwei oder mehrere Düsen für das Reinigungsmedium auf. Die Düsen sind bei Verwendung von flüssigem Kohlendioxid vorzugsweise so ausgebildet, dass die Bildung von Flocken bei Austritt von Kohlendioxid durch die Düsen gefördert wird. Die Düseneinrichtung wird am Triebwerk bzw. dessen Komponenten befestigt. Die Versorgungseinrichtung und die Düseneinrichtung sind über eine Leitungsverbindung miteinander verbunden. Diese Leitungsverbindung dient insbesondere der Zufuhr des (vorzugsweise unter Druck stehenden und ggf. gekühlten) Reinigungsmediums zu den Düsen der Düseneinrichtung. Die Leitungsverbindung ist bevorzugt flexibel und kann insbesondere einen ggf. druckfesten Schlauch aufweisen.

Die Düseneinrichtung der erfindungsgemäßen Vorrichtung kann so stromaufwärts vor einem Turbofan bzw. den Verdichtungsstufen eines Triebwerks positioniert werden, dass die an den Düsen entstehenden Flocken oder die Pellets in das Triebwerk gelangen. Dabei kann der Impuls, den die Flocken nach dem Austreten des Kohlendioxids aus den Düsen aufweisen, ausreichend sein. Es kann aber auch vorgesehen sein, dass sich das Strahltriebwerk im Dry-Cranking Betrieb bewegt, und der so entstehende Luftzug durch das Triebwerk die Verteilung des festen Kohlendioxids fördert. Durch das Rotieren des Triebwerks im Dry-Cranking kann außerdem sichergestellt werden, dass alle Teile des Triebwerks von dem Reinigungsmedium umströmt werden. Somit kann eine umfassende Reinigung gewährleistet werden.

Bei einem Triebwerk mit Nebenstrom, d.h. mit einem Turbofan, kann die Düseneinrichtung durch Ausrichtung der Düsen so ausgebildet sein, dass das Reinigungsmedium besonders in die Kompressorstufen eingebracht wird. Von den Kompressorstufen wird das Reinigungsmedium dann weiter in die Brennkammer und die Turbinenstufen getragen. Verschmutzungen in den genannten Bauteilen haben große Auswirkungen auf den Wirkungsgrad des gesamten Triebwerks. Daher ist eine gründliche Reinigung besonders dieser Triebwerkskomponenten wichtig.

Die Düseneinrichtung weist eine oder mehrere Düsen auf. Besonders bevorzugt ist es, wenn die Düseneinrichtung wenigstens zwei Düsen aufweist. Dadurch kann die besprühte Fläche vergrößert werden und die gesamte Fläche des Turbofans bzw. der Kompressorstufen kann überstrichen werden.

Die Düseneinrichtung weist Mittel zur drehfesten Verbindung mit der Welle des Turbofans und/oder der Kompressorstufen des Strahltriebwerks auf und es ist eine Drehkupplung zwischen der Düseneinrichtung und der Leitungsverbindung vorgesehen. Durch die drehfeste Verbindung mit der Welle kann die Düseneinrichtung beim Dry-Cranking, d.h. beim langsamen Durchdrehen des Triebwerks ohne Einspritzung von Kerosin, mitrotieren. Insbesondere beim bevorzugten Einsatz von Flachstrahldüsen kann so sichergestellt werden, dass das Reinigungsmedium gleichmäßig im gesamten Triebwerk verteilt wird.

Um eine möglichst große Reinigungswirkung zu erzielen, sind die Düsen vorzugsweise als Flachstrahldüsen ausgeführt. Dabei ist bevorzugt, wenn die Strahlebene der Düsen im Bereich ihrer Austrittsöffnung im Wesentlichen in Radialrichtung des Strahltriebwerks weist, d.h. sie wird von zwei Achsen aufgespannt, von denen eine in Radialrichtung weist. Auf diese Weise kann der Flachstrahl besonders wirksam die gesamte Fläche der Kompressorstufen beim Dry-Cranking überstreichen.

Es ist weiter bevorzugt, dass die Strahlebene einen Anstellwinkel mit der Drehachse einschließt. Dies bedeutet, dass die Strahlrichtung nicht parallel zur Drehachse erfolgt, sondern mit dieser Achse einen Winkel einschließt. Die Strahlrichtung weist um diesen Winkel von der Axialrichtung ab. Bevorzugt ist es, wenn sich dieser Winkel nach dem Einstellwinkel des Turbofans oder der vorderen Kompressorstufe richtet. Bei der vorderen Kompressorstufe handelt es sich in der Regel um eine nicht rotierende Statorstufe, die bei einer passenden Einstellung des Strahlwinkels zu deren Einstellwinkel von dem Flachstrahl teilweise durchstrichen werden können, so dass es zu einer wirksameren Reinigung der dahinterliegenden Kompressorstufen kommt.

Der Begriff der Drehkupplung zwischen Düseneinrichtung und der Leitungsverbindung ist funktionell zu verstehen und bezeichnet jegliche Einrichtung, die sich zum Herstellen einer hinreichend stabilen, bevorzugt druckfesten und flüssigkeitsdichten Verbindung zwischen dem stationärem Teil der Leitungsverbindung und der mit dem Fan mitrotierenden Düseneinrichtung eignet. Zweck der Drehkupplung ist es, das Reinigungsmedium aus der stationären Versorgungseinrichtung in die mitdrehende Düseneinrichtung zu leiten und dann aus den Düsen austreten zu lassen.

Es kann vorgesehen sein, dass die Düseneinrichtung so am Turbofan befestigt ist, dass ihre Düsen zwischen den Schaufeln des Turbofans hindurchweisen. Dadurch wird eine gezielte Reinigung der Kompressorstufen und daran anschließend der Brennkammer bzw. Turbinenstufen erreicht. Die beim Dry-Cranking mitdrehenden Düsen bestreichen dabei die erste Kompressorstufe gleichmäßig über den gesamten Umfang. Das Reinigungsmedium unterliegt dabei keiner Beeinträchtigung durch den in Strömungsrichtung davor angeordneten Turbofan und die Sprührichtung des Reinigungsmediums kann so an den Anstellwinkel der Schaufeln der ersten Kompressorstufe angepasst werden. Bei ortsfesten Anordnungen der Düsen vor dem Turbofan trifft ein wesentlicher Teil des Reinigungsmediums auf die Schaufeln des Turbofans und kann daher nicht, oder zumindest nicht direkt, zur Reinigung der Kompressorstufen beitragen. Der bevorzugten Ausführungsform liegt die Erkenntnis zugrunde, dass die gezielte Reinigung der Kompressorstufen, der Brennkammer und der Turbinenstufen wesentlich ist für die angestrebte Verbesserung des thermodynamischen Wirkungsgrads des gesamten Triebwerks. Eine möglicherweise gewünschte zusätzliche Reinigung des Turbofans kann dabei beispielsweise durch eine manuelle Reinigung oder aber durch separates Ansprühen des Turbofans mit dem Reinigungsmedium Kohlendioxid erreicht werden.

Die Massenverteilung der Düseneinrichtung ist bevorzugt rotationssymmetrisch um deren Drehachse. Auf diese Weise wird beim Mitrotieren der Düseneinrichtung keine wesentliche zusätzliche Unwucht eingebracht. Die Drehkupplung sitzt zu diesem Zweck bevorzugt im Wesentlichen zentrisch auf der Drehachse der erfindungsgemäßen Vorrichtung im montierten Zustand. Bevorzugt weist die Düseneinrichtung wenigstens zwei oder mehr Düsen auf, die bevorzugt rotationssymmetrisch um die Drehachse verteilt sind.

Die Austrittsöffnung der Düsen ist bevorzugt im von der Drehkupplung wegweisenden Endbereich der Düseneinrichtung angeordnet. Die Drehkupplung befindet sich bevorzugt im vorderen Bereich der Düseneinrichtung, d.h. in demjenigen Bereich, der im montierten Zustand stromaufwärts, also weg vom Einlass des Strahltriebwerks, weist. Die Austrittsöffnung der Düsen ist dementsprechend im davon wegweisenden axialen Endbereich der Düseneinrichtung vorgesehen, also im montierten Zustand in dem stromabwärts liegenden Endbereich. Diese Anordnung ermöglicht es, die Düsen bei der Montage auf der Welle des Fans eines Turbofan-Triebwerks entweder durch die Zwischenräume der Schaufeln hindurchzustecken, so dass sie unmittelbar vor der ersten Kompressorstufe angeordnet sind, oder aber zumindest gezielt so auszurichten, dass sie durch die Zwischenräume der Schaufeln des Turbofans hindurch direkt auf die erste Kompressorstufe sprühen.

Die Mittel zur drehfesten Verbindung mit der Welle des Turbofans des Strahltriebwerks umfassen bevorzugt Befestigungsmittel zur Befestigung an den Turbofanschaufeln, wie beispielsweise geeignet ausgebildete Haken, mit denen die Düseneinrichtung an den Hinterkanten (die stromabwärts liegenden Kanten) der Schaufeln des Turbofans eingehakt werden kann.

Die Düseneinrichtung kann zur drehfesten Fixierung mit der Welle des Turbofans eine Einrichtung zum im Wesentlichen formschlüssigen Aufsetzen auf die Wellennabe des Fans aufweisen. Turbofan-Triebwerke weisen nämlich in der Regel auf dem stromaufwärts gelegenen Ende der Welle des Turbofans eine konisch gekrümmte Nabe auf, die das Anströmverhalten der Luft verbessern soll. Auf diese Nabe können die entsprechenden Mittel zur drehfesten Verbindung aufgesetzt werden. "Im Wesentlichen formschlüssig" bedeutet in diesem Zusammenhang, dass die Form der Wellennabe genutzt wird zur beabsichtigten Positionierung der Düseneinrichtung und zur Fixierung in der gewünschten Position. Es bedeutet nicht, dass die gesamte Fläche der Wellennabe formschlüssig umschlossen sein muss.

Beispielsweise kann die Einrichtung ein oder mehrere Ringteile aufweisen, mit denen sie auf die Wellennabe aufgesetzt werden kann. Bei einer Mehrzahl von Ringteilen weisen diese einen unterschiedlichen Durchmesser auf, der angepasst ist an den Durchmesser der Wellennabe in den entsprechenden Bereichen. Beispielsweise können zwei axial beabstandete Ringe unterschiedlichen Durchmessers vorgesehen sein, mit denen die Düseneinrichtung auf der Wellennabe positioniert und zentriert wird.

Spannseile können vorzugsweise zur weiteren Fixierung vorgesehen sein. Beispielsweise kann die Düseneinrichtung mittels der Ringteile auf der Wellennabe des Fans zentriert werden und dann mit Spannseilen, die an der Hinterkante der Turbofanschaufeln fixiert werden, verspannt werden. Erfindungsgemäß können Federeinrichtungen zum Vorspannen der Spannseile vorgesehen sein, damit die Düseneinrichtung mit einer definierten Kraft an die Wellennabe angedrückt wird.

Die Spannseile sind bevorzugt (beispielsweise mittels Haken) an den Turbofanschaufeln, bevorzugt an deren Hinterkante, befestigt. Die Versorgungseinrichtung für das Reinigungsmedium weist bevorzugt wenigstens einen Vorratstank für das Reinigungsmedium und wenigstens eine Pumpe zur Druckbeaufschlagung der Düseneinrichtung mit dem Reinigungsmedium auf. Der Vorratstank ist bevorzugt wärmeisoliert und mit Druck beaufschlagbar, damit das Reinigungsmittel Kohlendioxid länger im Vorratstank verweilen kann. Besonders bevorzugt ist es, wenn der Vorratstank eine Kühleinrichtung aufweist, um das Kohlendioxid auf der richtigen Temperatur zu halten.

Es ist außerdem bevorzugt, wenn die Vorrichtung so ausgebildet ist, dass die weiter unten beschriebenen Verfahrensparameter eingestellt werden können.

Gegenstand der Erfindung ist ferner eine Anordnung aus einem Strahltriebwerk und einer zur Vornahme einer Reinigung des Strahltriebwerks geeigneten Vorrichtung wie vorgehend beschrieben. Die Anordnung ist dadurch gekennzeichnet, dass die zur Vornahme der Reinigung des Strahltriebwerks geeignete Vorrichtung so angeordnet ist, dass ihre Düsen auf den Einlauf des Strahltriebwerks gerichtet sind.

Sollen bei einem Turbofan-Triebwerk der Turbofan nicht durch das Reinigungsmedium aus der Vorrichtung gereinigt werden, kann bevorzugt vorgesehen sein, dass die Düseneinrichtung drehfest mit der Welle des Fans des Strahltriebwerks verbunden ist, die Drehachsen des Fans des Strahltriebwerks und der Düseneinrichtung im wesentlichen konzentrisch angeordnet sind, die Düsen der Düseneinrichtung einen radialen Abstand von der gemeinsamen Drehachse des Strahltriebwerks und der Vorrichtung aufweisen, der vorzugsweise kleiner ist als der Radius der ersten Kompressorstufe und die Austrittsöffnungen der Düsen in Axialrichtung hinter der Ebene des Turbofans angeordnet und/oder die Düsen in den Zwischenräumen der Turbofanschaufeln angeordnet und/oder auf Zwischenräume der Turbofanschaufeln ausgerichtet sind, so dass die Düsenstrahlen im wesentlichen ungehindert durch die Ebene des Turbofans hindurchtreten können.

Bevorzugt ist der Einstellwinkel der Strahlebenen der Düsen mit der Drehachse angepasst an den Einstellwinkel der in Strömungsrichtung des Triebwerks vorderen Kompressorstufenschaufeln. Auf diese Weise wird die Reinigungswirkung in den hinteren Kompressorstufen bzw. der Brennkammer und den Turbinenstufen verbessert.

Gegenstand der Erfindung ist ferner ein Verfahren zum Reinigen eines Strahltriebwerks mit einem Reinigungsmittel, wobei als Reinigungsmittel festes Kohlendioxid verwendet wird. Das Verfahren wird unter Verwendung der oben beschriebenen Vorrichtung durchgeführt. Es weist die folgenden Schritte auf:
a) Anbringung der Düseneinrichtung, so dass diese drehfest mit der Welle des Turbofans des Strahltriebwerks verbunden ist und die Austrittsöffnungen der Düsen auf den Einlass des Strahltriebwerks gerichtet sind;
b) Rotierenlassen des Strahltriebwerks;
c) Beaufschlagung der Düseneinrichtung mit Reinigungsmedium und Reinigung des Strahltriebwerks.

Es kann auch vorgesehen sein, dass die Düseneinrichtung an der Nabe des Fans des Strahltriebwerks angebracht wird, so dass die Austrittsöffnungen der Düsen auf die erste Kompressorstufe gerichtet sind.

Das Dry-Cranking bzw. Rotierenlassen des Strahltriebwerks während des Reinigungsvorgangs erfolgt bevorzugt mit einer Drehzahl von 50 bis 500 min⁻¹, vorzugsweise 100 bis 300 min⁻¹, weiter vorzugsweise 120 bis 250 min⁻¹. Besonders bevorzugt ist eine Drehzahl zwischen 150 und 250 min⁻¹. Das Reinigen kann auch im Leerlaufbetrieb des Triebwerks stattfinden. Die Drehzahl beträgt dann bevorzugt 500 bis 1500 min⁻¹.

Die Dauer des Reinigungsvorgangs beträgt bevorzugt 1 bis 15 min, weiter vorzugsweise 2 bis 10 min, weiter vorzugsweise 3 bis 7 min.

Ein Ausführungsbeispiel der Erfindung wird im Folgenden anhand der Zeichnungen erläutert. Darin zeigen:
- Fig. 1: eine erfindungsgemäße Vorrichtung zum Reinigen eines Strahltriebwerks;
- Fig. 2: eine Ansicht der Düseneinrichtung aus Fig. 1;
- Fig. 3: einen Schnitt durch die Ebene B-B der Fig. 2 einer Düseneinrichtung, die auf die Wellennase eines Turbofans aufgesetzt ist;

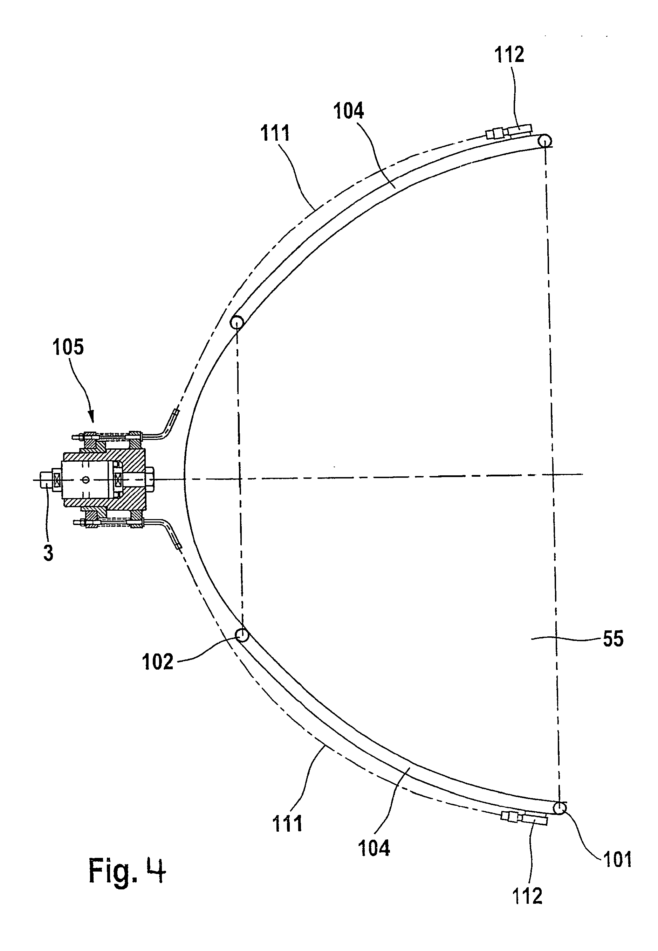

- Fig. 4: einen Schnitt durch die Ebene B-A der Fig. 2 einer Düseneinrichtung, die auf die Wellennase eines Fans aufgesetzt ist;
- Fig. 5: in einem Detailausschnitt aus Fig. 3 die Drehkupplung;
- Fig. 6: in einem Detailausschnitt aus Fig. 4 die Drehkupplung.

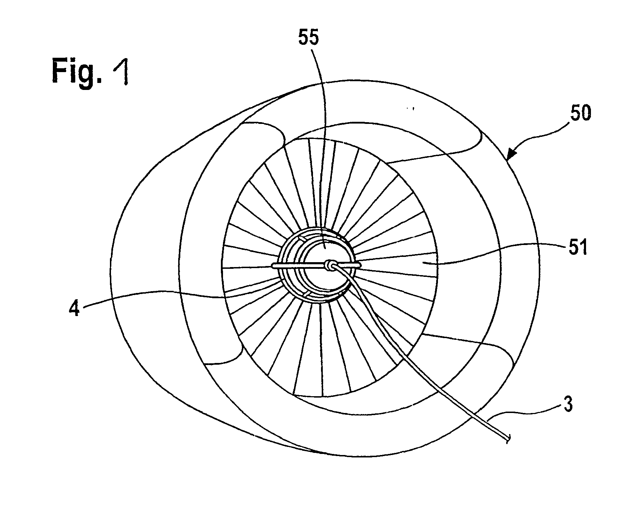

Die Vorrichtung zum Reinigen eines Strahltriebwerks 50 in Fig. 1 weist eine Düseneinrichtung 4 auf, die drehfest mit der Wellennabe 55 des Turbofans 51 verbunden ist. Die Düseneinrichtung 4 wird über die Leitung 3 von der nicht dargestellten Versorgungseinrichtung mit dem Reinigungsmedium Kohlendioxid versorgt. Die Düseneinrichtung 4 wird anhand der nachfolgenden Figuren näher erläutert.

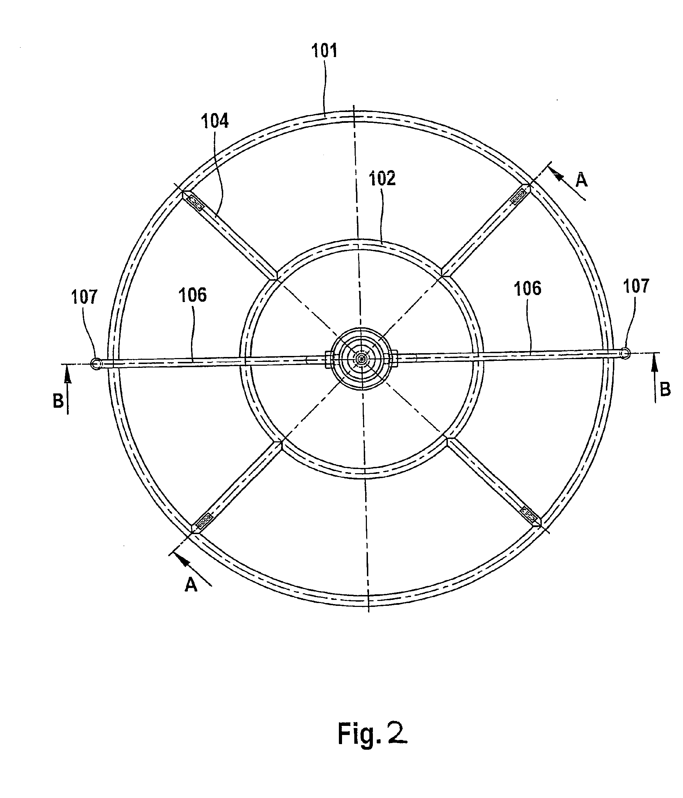

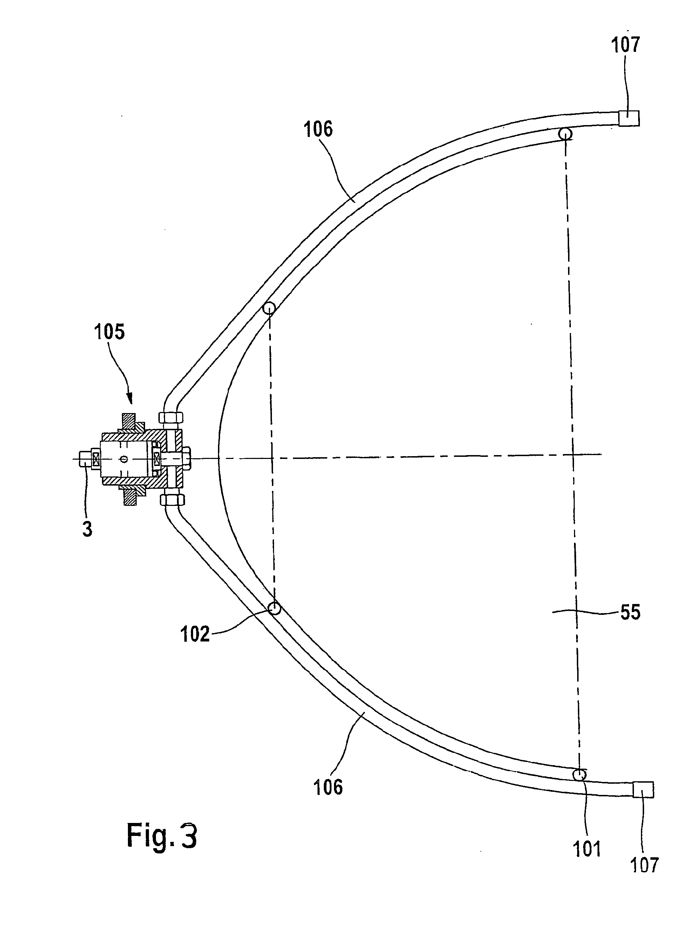

Die Düseneinrichtung in Fig. 2 weist zwei Ringelemente 101, 102 auf, mit deren Hilfe die Düseneinrichtung auf eine Wellennabe 55 des Turbofans 51 eines Strahltriebwerks 50 aufgesetzt wird (siehe Fig. 3, 5 und 6). Im aufgesetzten Zustand umschließen die Ringelemente 101, 102 die Wellennabe 55 im Wesentlichen formschlüssig. Die beiden Ringelemente 101, 102 sind durch Radialstreben 104 miteinander verbunden. An der stromaufweisenden Spitze der Düseneinrichtung (bezogen auf die Strömungsrichtung des Triebwerks) ist eine insgesamt mit 105 bezeichnete Drehkupplung angeordnet. Von dieser Drehkupplung 105 erstrecken sich zwei radial nach außen führende Druckleitungen 106, die zwei Flachstrahldüsen 107 mit Reinigungsmedium speisen. In der Detailansicht der Figur 7 ist zu erkennen, dass die beiden Druckleitungen 106 über Radialkanäle 108 und einen axialen Kanal 109 der Drehkupplung 105 in Flüssigkeitsverbindung stehen mit einer Zufuhrleitung 3, die die Drehkupplung 105 mit der in der Zeichnung nicht dargestellten Versorgungseinheit verbindet.

Die Druckleitungen 106 sind an den Kreuzungspunkten mit den Ringelementen 101, 102 an diesen Ringelementen fixiert und somit Teil der Tragstruktur der gesamten Düseneinrichtung 4.

Zur Befestigung der Düseneinrichtung 4 an der Wellennabe 55 des Turbofans 51 sind bei 111 angedeutete Spannseile vorgesehen, die mittels Haken 112 an den Hinterkanten des Turbofanschaufeln eingehakt werden. Wie in Figur 8 zu erkennen, werden die Spannseile 111 über an der Drehkupplung befestigte Spannseilführungen 117 zu der Drehkupplung geführt und dort an einem axial verschieblichen Spannring 113 befestigt. Druckfedern 114 stützen sich an einer Ringschulter 115 der Drehkupplung ab und bringen auf den Spannring 113 eine in Richtung weg von der Ringschulter 115 wirkende Kraft auf. Im aufgesetzten Zustand bringen die Druckfedern 114 auf die Spannseile 111 eine Vorspannung auf und sorgen damit für eine Fixierung der Düseneinrichtung mit der Nabe 55 des Turbofans 51. Durch eine Spannmutter 116, welche auf einem Gewinde des Kupplungsgehäuses 118 sitzt, wird der Spannring 113 stromaufwärts bewegt. Dadurch wird eine Spannkraft auf die Spannseile 111 übertragen und somit eine sichere Verbindung der Düseneinrichtung mit der Nabe des Fans hergestellt.

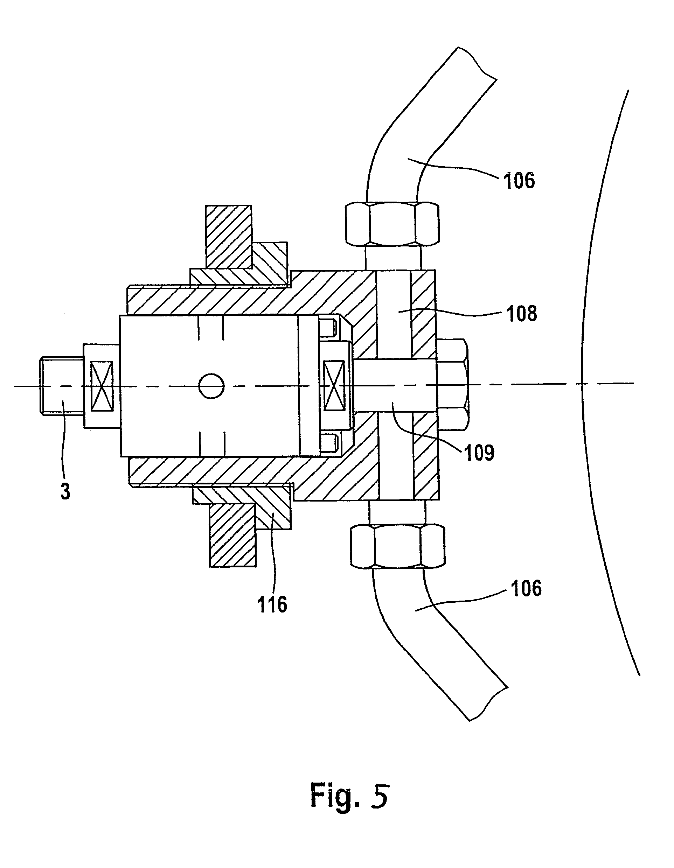

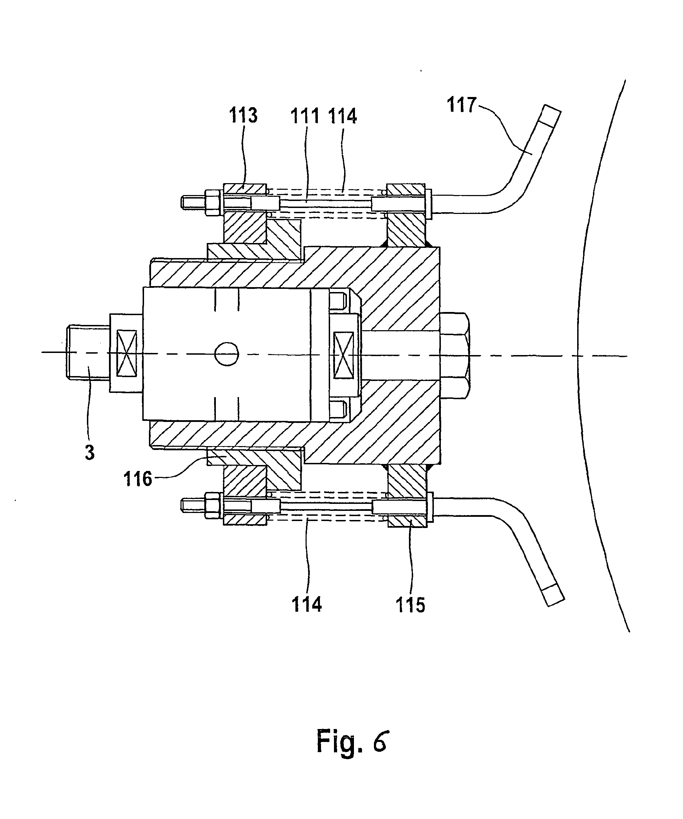

Zum Reinigen der Kompressorstufen, der Brennkammer und der Turbinenstufen eines Strahltriebwerks 50 mit Turbofan 51 wird die Düseneinrichtung 4 in der insbesondere aus den Figuren 5 und 6 erkennbaren Weise auf die Wellennabe 55 des Turbofans 51 aufgesetzt und an den Schaufeln des Turbofans 51 mittels der Haken 112 fixiert. Das Triebwerk wird in Drehung versetzt (dry-cranking). Über die Verbindungsleitung 3, die Drehkupplung 105 und die Druckleitungen 106 werden die Flachstrahldüsen 107 mit Reinigungsmedium aus der nicht dargestellten Versorgungseinrichtung gespeist. Dieses Reinigungsmedium überstreicht den Einlass der ersten Kompressorstufe über deren gesamten Umfang und führt so die Reinigung aus. Als Reinigungsmittel wird flüssiges Kohlendioxid verwendet, bei der sich kurz nach Austritt aus den Düsen Flocken bilden. Diese Flocken gelangen in das Triebwerk und lösen aufgrund ihrer niedrigen Temperatur durch induzierte Kälte-Wärme-Spannungen die Verschmutzung von den Komponenten des Triebwerks. Dabei kann das Triebwerk im Dry-Cranking-Modus rotieren. Durch den dadurch entstehenden Luftstrom werden die Kohlendioxidflocken im gesamten Triebwerk verteilt. Außerdem kann so der gelöste Schmutz nach hinten aus dem Triebwerk geblasen und dort aufgefangen werden. Da das feste Kohlendioxid nach einiger Zeit vollständig sublimiert, bleiben keine Rückstände im Triebwerk zurück. Auch die gelöste Verschmutzung muss nicht mehr vom Reinigungsmedium getrennt werden, sondern kann sofort entsorgt werden.

## Patentansprüche

1. Vorrichtung zum Reinigen eines Strahltriebwerkes (50) mit einer Versorgungseinrichtung (2), die ein Reinigungsmedium zur Verfügung stellt, einer Düseneinrichtung (4), die zum Einbringen des Reinigungsmediums in das Strahltriebwerk (50) ausgebildet ist, und mit einer Leitungsverbindung (3) zwischen der Versorgungseinrichtung (2) und der Düseneinrichtung (4), **dadurch gekennzeichnet, dass** das Reinigungsmedium festes Kohlendioxid aufweist, und dass die Düseneinrichtung (4) Mittel zur drehfesten Verbindung mit der Welle des Turbofans (51) des Strahltriebwerks (50) aufweist und eine Drehkupplung (105) zwischen der Düseneinrichtung (4) und der Leitungsverbindung (3) vorgesehen ist.

2. Vorrichtung nach Anspruch 1,**dadurch gekennzeichnet, dass** das Reinigungsmedium Kohlendioxidpellets und/oder Kohlendioxidflocken aufweist.

3. Vorrichtung nach Anspruch 1 oder 2, **dadurch gekennzeichnet, dass** die Düseneinrichtung (4) zum Einbringen des Reinigungsmediums in die Kompressorstufen (52) des Strahltriebwerks (50) ausgebildet ist.

4. Vorrichtung nach einem der Ansprüche 1 bis 3, **dadurch gekennzeichnet, dass** die Massenverteilung der Düseneinrichtung (4) rotationssymmetrisch um deren Drehachse ist.

5. Vorrichtung nach Anspruch 1 bis 4, **dadurch gekennzeichnet, dass** die Düsen (5) Flachstrahldüsen sind, wobei vorzugsweise die Strahlebene im Bereich der Austrittsöffnung der Düsen (5) im Wesentlichen in Radialrichtung des Strahltriebwerks (50) weist, und wobei vorzugsweise die Strahlebene einen Anstellwinkel mit der Drehachse des Strahltriebwerks (50) einschließt.

6. Vorrichtung nach Anspruch 5, **dadurch gekennzeichnet, dass** die Austrittsöffnungen der Düsen (5) im von der Drehachse der Düseneinrichtung (4) wegweisenden axialen Endbereich der Düseneinrichtung (4) angeordnet sind.

7. Vorrichtung nach einem der Ansprüche 1 bis 6, **dadurch gekennzeichnet, dass** die Mittel zur drehfesten Verbindung mit der Welle des Turbofans (51) des Strahltriebwerks (50) Befestigungsmittel zur Befestigung an den Schaufeln des Turbofans (51) und/oder eine Einrichtung zum im Wesentlichen formschlüssigen Aufsetzen auf die Wellennabe (55) des Turbofans (51) aufweisen, wobei vorzugsweise die Einrichtung zum im Wesentlichen formschlüssigen Aufsetzen auf die Wellennabe (55) des Turbofans (51) wenigstens ein Ringteil (101, 102) und Spannseile (111) umfasst, und wobei vorzugsweise Federeinrichtungen (114) zum Vorspannen der Spannseile (111) vorgesehen sind.

8. Vorrichtung nach Anspruch 7, **dadurch gekennzeichnet, dass** das Befestigungsmittel (112) zum Befestigen der Spannseile (111) an den Schaufeln des Turbofans (51) vorgesehen ist.

9. Anordnung aus einem Stahltriebwerk (50) und einer zur Vornahme einer Reinigung des Stahltriebwerks geeignete Vorrichtung (1) gemäß einem der Ansprüche 1 bis 8, **dadurch gekennzeichnet, dass** die zur Vornahme einer Reinigung des Stahltriebwerks (50) geeignete Vorrichtung (1) so angeordnet ist, dass ihre Düsen (5) auf den Einlauf des Strahltriebwerks (50) gerichtet sind, so dass das Reinigungsmittel in das Strahltriebwerk (50) gelangt.

10. Anordnung nach Anspruch 9, **gekennzeichnet durch** die folgenden Merkmale:
a) Die Düseneinrichtung (4) ist drehfest mit der Welle des Turbofans (51) des Strahltriebwerks (50) verbunden;
b) Die Drehachsen des Turbofans (51) des Strahltriebwerks (50) und der Düseneinrichtung (4) sind im Wesentlichen konzentrisch angeordnet;
c) Die Düsen (5) der Düseneinrichtung (4) weisen einen radialen Abstand von der gemeinsamen Drehachse des Strahltriebwerks (50) und der Düseneinrichtung (4) auf, der kleiner ist als der Radius der Eintrittöffnung der ersten Kompressorstufe;
d) Die Austrittsöffnungen der Düsen (5) sind in Axialrichtung hinter der Ebene des Turbofans (51) angeordnet und/oder die Düsen (5) sind in den Zwischenräumen der Schaufeln des Turbofans (51) angeordnet und/oder auf Zwischenräume der Schaufeln des Turbofans (51) ausgerichtet, so dass die Düsenstrahlen im Wesentlichen ungehindert **durch** die Ebene des Turbofans (51) hindurch treten können.

11. Anordnung nach Anspruch 10, **dadurch gekennzeichnet, dass** die Strahlebene der Düsen (5) einen Anstellwinkel mit der Drehachse einschließt, der im Wesentlichen dem Anstellwinkel der Schaufeln der in Strömungsrichtung des Triebwerks vorderen Kompressorstufe entspricht.

12. Verfahren zum Reinigen eines Strahltriebwerks **dadurch gekennzeichnet, dass** eine Vorrichtung nach einem der Ansprüche 1 bis 9 verwendet wird und das Verfahren die folgenden Schritte aufweist:
a) Anbringen der Düseneinrichtung (4), so dass diese drehfest mit der Welle des Turbofans (51) des Strahltriebwerks (50) verbunden ist und die Austrittsöffnungen der Düsen (5) auf den Einlass des Strahltriebwerks (50) gerichtet sind;
b) Rotierenlassen des Strahltriebwerks (50);
c) Beaufschlagung der Düseneinrichtung (4) mit Reinigungsmedium und Reinigen des Strahltriebwerks.

13. Verfahren nach Anspruch 12, **dadurch gekennzeichnet, dass** die Düseneinrichtung (4) an der Wellennabe (55) des Turbofans (51) des Strahltriebwerks (50) angebracht wird, so dass die Austrittsöffnungen der Düsen (5) auf die in Strömungsrichtung des Triebwerks vordere Kompressorstufe gerichtet sind.

14. Verfahren nach Anspruch 12 oder 13, **dadurch gekennzeichnet, dass** das Strahltriebwerk (50) mit einer Drehzahl von 50 bis 500 min⁻¹, vorzugsweise 100 bis 300 min⁻¹, weiter vorzugsweise 120 bis 250 min⁻¹ rotieren gelassen wird.

15. Verfahren nach einem der Ansprüche 12 bis 14, **dadurch gekennzeichnet, dass** das Reinigen des Strahltriebwerks (50) über einen Zeitraum von 1 bis 15 min, vorzugsweise 2 bis 10 min, weiter vorzugsweise 3 bis 7 min durchgeführt wird.

## Claims

1. Device for cleaning a jet engine (50) with a supply apparatus (2), which makes a cleaning medium available, a nozzle apparatus (4), which is formed to introduce the cleaning medium into the jet engine (50), and with a line connection (3) between the supply apparatus (2) and the nozzle apparatus (4), **characterised in that** the cleaning medium has solid carbon dioxide, and that the nozzle apparatus (4) has means for the rotationally fixed connection to the shaft of the turbofan (51) of the jet engine (50) and a rotary coupling (105) is provided between the nozzle apparatus (4) and the line connection (3).

2. Device according to claim 1, **characterised in that** the cleaning medium has carbon dioxide pellets and/or carbon dioxide flakes.

3. Device according to claim 1 or 2, **characterised in that** the nozzle apparatus (4) is formed to introduce the cleaning medium into the compressor stages (52) of the jet engine (50).

4. Device according to one of claims 1 to 3, **characterised in that** the mass distribution of the nozzle apparatus (4) is rotationally symmetrical about its axis of rotation.

5. Device according to claim 1 to 4, **characterised in that** the nozzles (5) are flat spray nozzles, wherein preferably the spray plane in the area of the outlet opening of the nozzles (5) points substantially in a radial direction of the jet engine (50), and wherein preferably the spray plane encloses an angle of incidence with the axis of rotation of the jet engine (50).

6. Device according to claim 5, **characterised in that** the outlet openings of the nozzles (5) are disposed in the axial end area of the nozzle apparatus (4) giving direction from the axis of rotation of the nozzle apparatus (4).

7. Device according to one of claims 1 to 6, **characterised in that** the means for the rotationally fixed connection to the shaft of the turbofan (51) of the jet engine (50) have attachment means for attachment to the blades of the turbofan (51) and/or an apparatus for the substantially form-fit placement onto the shaft hub (55) of the turbofan (51), wherein preferably the apparatus for the substantially formfit placement onto the shaft hub (55) of the turbofan (51) comprises at least one ring part (101, 102) and stays (111), and wherein preferably spring apparatuses (114) are provided for pretensioning the stays (111).

8. Device according to claim 7, **characterised in that** the attachment means (112) is provided to attach the stays (111) to the blades of the turbofan (51).

9. Arrangement of a jet engine (50) and a device (1) suitable for carrying out cleaning of the jet engine according to one of claims 1 to 8, **characterised in that** the device (1) suitable for carrying out cleaning of the jet engine (50) is arranged such that its nozzles (5) are aimed at the inlet of the jet engine (50), so that the cleaning means gets into the jet engine (50).

10. Arrangement according to claim 9, **characterised by** the following 5 features:
a) The nozzle apparatus (4) is connected rotationally fixedly to the shaft of the turbofan (51) of the jet engine (50);
b) The axes of rotation of the turbofan (51) of the jet engine (50) and the nozzle apparatus (4) are substantially arranged concentrically;
c) The nozzles (5) of the nozzle apparatus (4) have a radial spacing from the common axis of rotation of the jet engine (50) and the nozzle apparatus (4) that is smaller than the radius of the inlet opening of the first compressor stage;
d) The outlet openings of the nozzles (5) are arranged in an axial direction behind the plane of the turbofan (51) and/or the nozzles (5) are arranged in the interstices of the blades of the turbofan (51) and/or aimed at interstices of the blades of the turbofan (51), so that the nozzle sprays can pass substantially unobstructed through the plane of the turbofan (51).

11. Arrangement according to claim 10, **characterised in that** the spray plane of the nozzles (5) encloses an angle of incidence with the axis of rotation that substantially corresponds to the angle of incidence of the blades of the forward compressor stage in the flow direction of the engine.

12. Method for cleaning a jet engine, **characterised in that** a device according to one of 5 claims 1 to 9 is used and the method has the following steps:
a) Attachment of the nozzle apparatus (4), so that this is connected rotationally fixedly to the shaft of the 10 turbofan (51) of the jet engine (50) and the outlet openings of the nozzles (5) are aimed at the inlet of the jet engine (50);
b) Letting the jet engine (50) rotate;
c) Loading of the nozzle apparatus (4) with cleaning medium and cleaning of the jet engine.

13. Method according to claim 12, **characterised in that** the nozzle apparatus (4) is attached to the shaft hub (55) of the turbofan (51) of the jet engine (50), so that the outlet openings of the nozzles (5) are aimed at the forward compressor stage in the flow direction of the engine.

14. Method according to claim 12 or 13, **characterised in that** the jet engine (50) is rotated at a speed of 50 to 500 rpm, preferably 100 to 300 rpm, further preferably 120 to 250 rpm.

15. Method according to one of claims 12 to 14, **characterised in that** the cleaning of the jet engine (50) is carried out over a period of 1 to 15 minutes, preferably 2 to 10 minutes, further preferably 3 to 7 minutes.

## Revendications

1. Dispositif servant à nettoyer un moteur à réaction (50) comportant un système d'alimentation (2) qui met à disposition un milieu de nettoyage, un système d'injection (4) réalisé pour introduire le milieu de nettoyage dans le réacteur (50), ainsi qu'un système de raccordement de conduite (3) entre le système d'alimentation (2) et le système d'injection (4), **caractérisé en ce que** le milieu de nettoyage présente du dioxyde de carbone solide, et **en ce que** le système d'injection (4) présente des moyens servant au raccordement de manière solidaire en rotation avec l'arbre du turboréacteur à double flux (51) du moteur à réaction (50), et **en ce qu'**un accouplement en rotation (105) est prévu entre le système d'injection (4) et le système de raccordement de conduite (3).

2. Dispositif selon la revendication 1, **caractérisé en ce que** le milieu de nettoyage présente des pastilles de dioxyde de carbone et/ou des flocons de dioxyde de carbone.

3. Dispositif selon la revendication 1 ou 2, **caractérisé en ce que** le système d'injection (4) est réalisé pour introduire le milieu de nettoyage dans les étages de compresseur (52) du moteur à réaction (50).

4. Dispositif selon l'une quelconque des revendications 1 à 3, **caractérisé en ce que** la répartition des masses du système d'injection (4) est symétrique en rotation autour de l'axe de rotation de ce dernier.

5. Dispositif selon la revendication 1 à 4, **caractérisé en ce que** les buses (5) sont des éjecteurs plats, le plan d'éjection étant préférentiellement orienté dans la zone de l'orifice de sortie des buses (5) essentiellement dans la direction radiale du moteur à réaction (50) et le plan d'éjection formant de manière préférentielle un angle d'incidence avec l'axe de rotation du moteur à réaction (50).

6. Dispositif selon la revendication 5, **caractérisé en ce que** les orifices de sortie des buses (5) sont disposés dans la zone d'extrémité axiale du système d'injection (4), s'orientant à l'opposé de l'axe de rotation du système d'injection (4).

7. Dispositif selon l'une quelconque des revendications 1 à 6, **caractérisé en ce que** les moyens pour le raccordement de manière solidaire en rotation avec l'arbre du turboréacteur à double flux (51) du moteur à réaction (50) présentent des moyens de fixation destinés à la fixation sur les pales du turboréacteur à double flux (51) et/ou sur un système destiné à être posé essentiellement par complémentarité de forme sur le moyeu d'arbre (55) du turboréacteur à double flux (51), le système destiné à être posé essentiellement par complémentarité de forme sur le moyeu d'arbre (55) du turboréacteur à double flux (51) comprenant préférentiellement au moins une partie annulaire (101, 102) et des câbles de serrage (111), et des systèmes à ressorts (114) étant préférentiellement prévus pour enserrer les câbles de serrage (111).

8. Dispositif selon la revendication 7, **caractérisé en ce que** le moyen de fixation (112) est prévu pour fixer les câbles de serrage (111) sur les pales du turboréacteur à double flux (51).

9. Ensemble formé à partir d'un moteur à réaction (50) et d'un dispositif (1) approprié pour entreprendre un nettoyage du moteur à réaction selon l'une quelconque des revendications 1 à 8, **caractérisé en ce que** le dispositif (1) approprié pour entreprendre un nettoyage du moteur à réaction (50) est disposé de telle sorte que ses buses (5) sont orientées sur l'entrée du moteur à réaction (50) de sorte que le milieu de nettoyage parvient dans le moteur à réaction (50).

10. Ensemble selon la revendication 9, **caractérisé en ce que** :
a) le dispositif d'injection (4) est relié de manière solidaire en rotation à l'arbre du turboréacteur à double flux (51) du moteur à réaction (50) ;
b) les axes de rotation du turboréacteur à double flux (51) du moteur à réaction (50) et du dispositif d'injection (4) sont
disposés essentiellement de manière concentrique ;
c) les buses (5) du système d'injection (4) présentent un écart radial de l'axe de rotation commun du moteur à réaction (50) et du système d'injection (4), lequel est plus petit que le rayon de l'orifice d'entrée du premier étage de compresseur ; et
d) les orifices de sortie des buses (5) sont disposés dans la direction axiale, derrière le plan du turboréacteur à double flux (51) et/ou les buses (5) sont disposées dans les espaces intermédiaires des pales du turboréacteur à double flux (51) et/ou sont orientées sur des espaces intermédiaires des pales du turboréacteur à double flux (51) de sorte que les jets de buses peuvent traverser le plan du turboréacteur à double flux (51) essentiellement sans aucune entrave.

11. Ensemble selon la revendication 10, **caractérisé en ce que** le plan d'éjection des buses (5) forme un angle d'incidence avec l'axe de rotation, qui correspond essentiellement à l'angle d'incidence des pales de l'étage de compresseur avant dans la direction d'écoulement du groupe motopropulseur.

12. Procédé servant à nettoyer un moteur à réaction, **caractérisé en ce qu'**un dispositif selon l'une quelconque des revendications 1 à 9 est utilisé, et **en ce que** le procédé comprend les étapes suivantes consistant à :
a) placer le système d'injection (4) de sorte que ce dernier soit relié de manière solidaire en rotation à l'arbre du turboréacteur à double flux (51) du moteur à réaction (50) et que les orifices de sortie des buses (5) soient orientés sur l'entrée du moteur à réaction (50) ;
b) faire tourner le moteur à réaction (50) ; et
c) soumettre le système d'injection (4) à l'action d'un milieu de nettoyage et nettoyer le moteur à réaction.

13. Procédé selon la revendication 12, **caractérisé en ce que** le système d'injection (4) est placé sur le moyeu d'arbre (55) du turboréacteur à double flux (51) du moteur à réaction (50) de sorte que les orifices de sortie des buses (5) sont orientés sur l'étage de compresseur avant dans la direction d'écoulement du groupe motopropulseur.

14. Procédé selon la revendication 12 ou 13, **caractérisé en ce que** le moteur à réaction (50) est entraîné en rotation à une vitesse allant de 50 à 500 min⁻¹, préférentiellement de 100 à 300 min⁻¹, de manière plus préférentielle de 120 à 250 min⁻¹.

15. Procédé selon l'une quelconque des revendications 12 à 14, **caractérisé en ce que** le nettoyage du moteur à réaction (50) est effectué sur un laps de temps allant de 1 à 15 min, préférentiellement de 2 à 10 min, plus préférentiellement de 3 à 7 min.
